# EUROPÄISCHE PATENTSCHRIFT

(11) **EP 1 375 114 B1**
(45) Veröffentlichungstag und Bekanntmachung des Hinweises auf die Patenterteilung: **16.01.2008**
(21) Anmeldenummer: 03013923.2
(22) Anmeldetag: 20.06.2003
(51) Int. Cl.: B29C 65/72, F16L 47/00, B29C 65/02, B29C 65/20, B29C 65/36, B29C 65/56, B29C 65/58, F16L 37/084, F16L 47/02, B29L 23/00

(54) **Verfahren zum Fügen eines ersten Kunststoffrohres mit einem zweiten Kunststoffrohr und Kunststoffrohr**
Process for joining first and second synthetic pipes and pipe
Procédé pour la connection d'un premier et second tube en matière synthétique et tube

(30) Priorität: 28.06.2002 DE 10229242
(43) Veröffentlichungstag der Anmeldung: 02.01.2004
(73) Patentinhaber: Karl Schöngen KG, Kunststoff-Rohrsysteme, 38229 Salzgitter (DE)
(72) Erfinder: Meyer, Hans-Heinrich, 38229 Salzgitter (DE)
(74) Vertreter: Rehmann, Thorsten

(56) Entgegenhaltungen:
- DE-A- 10 009 475
- DE-U- 8 612 217
- FR-A- 1 249 628
- FR-A- 2 656 824
- US-A- 3 276 941
- US-A- 3 784 235
- US-A- 5 660 354
- US-A- 5 738 388
- US-A- 5 921 591
- PATENT ABSTRACTS OF JAPAN Bd. 016, Nr. 137 (M-1231), 7. April 1992 (1992-04-07) -& JP 04 000093 A (JUN TAGA), 6. Januar 1992 (1992-01-06)

## Beschreibung

Die Erfindung betrifft ein Verfahren zum Fügen eines ersten Kunststoffrohres mit einem zweiten Kunststoffrohr gemäß dem Oberbegriff des Anspruchs 1 sowie ein Kunststoffrohr gemäß dem Oberbegriff des Anspruchs 7.

Das Verfahren und das Rohr sind insbesondere bei der Rohrsanierung mittels Berstlining- oder Relining-Verfahren oder bei einem Rohrvortrieb mittels sogenannter "Erdraketen" geeignet.

Ein Kunststoffrohr, an dessen einem Ende der Innendurchmesser über einen Bereich vergrößert und an dessen anderem Ende der Außendurchmesser über einen Bereich verringert ist, wobei die Enden mit Mitteln zum mechanischen Verbinden mehrerer Rohre versehen sind, ist beispielsweise aus der DE 195 36 703 A1 bekannt. Derartige Rohre können als Leer- oder Verlegerohre für Gasleitungen oder Strom und Fernmeldekabel oder dergleichen verwendet und mittels sogenannter "Erdraketen" im Erdreich verlegt. In der Regel werden solche Rohre im Rahmen einer Rohrleitungssanierung, beispielsweise für Abwasserleitungen, verwendet, wobei beispielsweise durch einen Berstkopf das bestehende Steingut-, Betonoder Kunststoffrohr aufgebrochen oder auskalibriert wird. Das Neurohr wird dynamisch oder statisch eingezogen und/oder mechanisch vorangeschoben, und anschließend kann beispielsweise das Neurohr als Abwasserrohr oder Schutzrohr genutzt werden. Dadurch kann z. B. bei der Erneuerung von Abwasserkanälen oder Versorgungsleitungen erhebliche Zeit eingespart werden, weil der Boden nicht ausgehoben werden muss und Straßen unterquert werden können, ohne sie aufzureißen.

Das Neurohr wird dabei aus einem Rohrstrang gebildet, der aus einer Mehrzahl einzelner Rohre zusammengesetzt ist, die über eine Rastverbindung miteinander gekoppelt werden können. Die Verrastung der Rohre erfolgt über eine Eindrehung an dem einen Ende, in die ein nach radial innen ragender Vorsprung am äußeren anderen Ende einschnappen kann, wenn zwei Rohre ineinander gesteckt werden.

Gerade bei der Sanierung bestehender Rohrleitungen kann es aufgrund eines vorliegenden Rohrversatzes zu Biegungen innerhalb des Verlegerohres kommen, wobei die Gefahr besteht, dass die verrasteten Enden der Rohrabschnitte sich zueinander verbiegen, was zu einer Undichtigkeit führen kann.

Solche möglichen Undichtigkeitsstellen sind bei Gasleitungen oder Rohrleitungen, die chemisch aggressive Mittel transportieren, unerwünscht.

Um die Dichtigkeit zu verbessern, wurde vorgeschlagen, dass Dichtringe zwischen den Verrastungsmitteln angeordnet werden. Solche Anordnung ist in der DE 200 17 639 U1 beschrieben. Ein Problem wird darin gesehen, dass das Material der Dichtringe gegebenenfalls hinsichtlich der geförderten Substanzen nicht beständig ist. Weiterhin wird ein rein mechanisches Verrasten der Rohre vielfach als nicht ausreichend dicht empfunden.

Das bekannte Stumpfverschweißen von Kunststoffrohren hat den Nachteil, dass es sehr zeitaufwendig ist, da die Rohre nach dem Schweißen eine relativ lange Abkühlphase durchlaufen müssen und weil an dem Rohrinnendurchmesser eine Schweißwulst entsteht, der mühsam entfernt werden muss, was bei größeren Rohrlängen sehr zeitaufwendig ist.

Ausgehend von diesem Stand der Technik liegt der Erfindung die Aufgabe zugrunde, ein Verfahren und ein Kunststoffrohr bereitzustellen, mit der sicher und schnell Rohre aneinandergefügt werden können, die nicht in einem offenen Graben verlegt werden.

Erfindungsgemäß wird diese Aufgabe durch ein Verfahren mit den Merkmalen des Anspruchs 1 sowie ein Kunststoffrohr mit den Merkmalen des Anspruchs 7 gelöst. Weitere Ausführungsformen und vorteilhafte Weiterbildungen der Erfindung sind in den Unteransprüchen beschrieben.

Durch die Kombination des mechanischen, formschlüssigen Verrastens der Rohre einerseits und dem stoffschlüssigen Verbinden an der äußeren Stoßstelle zweier Rohre andererseits wird es ermöglicht, dass trotz Herstellen einer stoffschlüssigen Verbindung mittels Verschweißung der Kunststoffrohre eine hohe mechanische Belastbarkeit unmittelbar nach dem Verschweißen zur Verfügung gestellt wird, so dass mit dem Verlegen der Rohre ohne längere Unterbrechung fortgefahren werden kann.

Weiterhin wird vermieden, dass aufgrund der vorhandenen Restdicke an dem vorderen Ende des Rohres beim Verschweißen ein Schweißwulst innerhalb des Rohrstranges entsteht, der entweder eine strömungstechnische Verschlechterung bedeutet oder aber bei langen Rohren äußerst aufwendig nachträglich entfernt werden muss.

Um eine sichere, stoffschlüssige Verbindung der beiden gefügten Rohre zu gewährleisten, werden die Rohre während des Aufschmelzens axial zueinander belastet, so dass die aufgeschmolzenen Bereiche in Richtung aufeinander belastet werden, so dass einerseits die Verrastungsmittel vollständig ineinandergreifen und anderseits die aufgeschmolzenen Bereiche unter Druck miteinander verbunden werden. Das Aufeinanderzubewegen der beiden Rohre in axialer Richtung hat den Effekt einer Materialzufuhr, so dass eine sichere und vollständige, stoffschlüssige Verbindung im aufgeschmolzenen Bereich der Rohre erreicht wird.

Das Schmelzen erfolgt in einer Variante der Erfindung durch ein Heizelement, das zwischen dem Absatz des zweiten Rohres und dem hinteren Ende des ersten Rohres angeordnet ist und nach dem Aufschmelzen bzw. nach dem Erwärmen entfernt wird. Die jeweils erwärmten Bereiche befinden sich über einen gewissen Zeitraum in einem Zustand, in dem sie eine stoffschlüssige Verbindung eingehen können, wenn die Rohre aufeinander zu bewegt werden. Das Maß der Bewegung aufeinander zu wird einerseits durch die Abmessung des Heizelementes und andererseits durch die Abmessung des aufgeschmolzenen Bereiches in Axialerstreckung festgelegt. Die beiden Rohre werden soweit aufeinander zu geschoben, dass die Verrastungsmittel vollständig zur Wirkung gelangen und die beiden Rohre in einer Endposition befindlich sind, bei der die Verrastmittel über den gesamten Kopplungsbereich miteinander in Eingriff treten.

Alternativ zu dem Erwärmen mittels eines Heizelementes ist es vorgesehen, dass in dem Absatz des zweiten Rohres oder dem hinteren Ende des ersten Rohres ein Metallelement angeordnet ist, wobei das Erwärmen mittels einer Induktionserwärmung erfolgt. Auf diese Art und Weise kann sehr schnell, lokal begrenzt und ohne aufwendige Apparatur der Erwärmungsvorgang durchgeführt werden, wobei aufgrund des eingelegten Metallelementes und des daraus resultierenden Fehlens eines separaten Heizelementes die Zuordnung der Rohre zueinander wesentlich besser erfolgen kann.

Weiterhin ist vorgesehen, dass in dem Absatz des zweiten Rohres und/oder an dem hinteren Ende des ersten Rohres eine Materialzugabe angeordnet ist, die dergestalt aufgeschmolzen wird, dass nach dem Aufschmelzen der Materialzugabe und Ineinanderschieben der Rohre die Endposition der beiden Rohre eingenommen wird. Würden die beiden Rohre ineinander geschoben werden, ohne dass es zu einer Erwärmung der Endbereiche bzw. des Absatzes an dem vorderen Ende des ersten Rohres käme, würde eine Endposition der beiden Rohre nicht erreicht werden, da aufgrund der Materialzugabe eine gewisse Sperrwirkung vorliegen würde.

Bei dem erfindungsgemäßen Kunststoffrohr ist vorgesehen, dass an dem vorderen und hinteren Ende je ein Kopplungsbereich ausgebildet ist, wobei an dem vorderen Ende der Kopplungsbereich mit einem zum Rohraußendurchmesser verringerten Außendurchmesser mit erhöht ausgebildeten Verrastungsmitteln aufweist, wohingegen der hintere Kopplungsbereich einen zum Rohrinnendurchmesser vergrößerten Innendurchmesser mit vertieft ausgebildeten Verrastungsmitteln aufweist und die Außendurchmesser und Innendurchmesser sowie die Verrastungsmittel dergestalt miteinander korrespondieren, dass mehrere Rohre hintereinander mechanisch miteinander verbunden werden können. An dem hinteren Ende des Rohres und/oder an einem Absatz an dem rohrseitigen Ende des vorderen Kopplungsbereiches ist dabei ein sich axial erstreckender Aufschmelzbereich ausgebildet, der in dem oben beschriebenen Verfahren erwärmt wird und zum stoffschlüssigen Verbinden zweier Rohre verwendet wird. Durch diesen Aufschmelzbereich ist sichergestellt, dass trotz des "Materialverlustes" beim Aufschmelzen und Ineinanderschieben der beiden Rohre aufgrund der Ausbildung eines Schmelzwulstes die Verrastungsmittel korrekt einander zugeordnet bleiben, wodurch einerseits eine präzise, mechanische, formschlüssige Verbindung der Rohre hergestellt wird, andererseits die stoffschlüssige Verbindung zwischen den Rohren realisiert werden kann.

Der Aufschmelzbereich ist an den jeweiligen Kontaktflächen der zu verbindenden Rohre dergestalt ausgebildet, dass er eine Verriegelung über die gesamte Länge der Kopplungsbereiche verhindern würde, wenn die Rohre ineinandergefügt werden würden, ohne dass der Schmelzbereich bzw. die Schmelzbereiche erwärmt und plastisch verformbar gemacht werden würden.

Eine vorteilhafte Weiterbildung sieht vor, dass der Aufschmelzbereich als eine Rippe ausgebildet ist, wobei beiderseits der Rippe, also radial außerhalb und innerhalb der Rippe, eine Ausnehmung ausgebildet ist, so dass aufgeschmolzenes Material in diese Ausnehmungen eindringen kann, wenn die beiden Rohre nach dem Erwärmen unter Druck in axialer Richtung aufeinander zu bewegt werden. Die Ausnehmung radial innen hat den Vorteil, dass es zu keiner Aufweitung des hinteren Endes des Rohres oder einer Blockade beim Zusammenschieben der beiden Rohre kommt, da sich beim Zusammenschieben der beiden Rohre der entstehende Kunststoffwulst in die Ausnehmungen einfügt. Die Ausnehmungen radial außen haben den Vorteil, dass trotz eines sich ausbildenden Wulstes die Verbindung nicht auseinander gedrückt wird, da sich das Material innerhalb der Ausnehmung anlagert.

Eine besonders bevorzugte Ausgestaltung sieht vor, dass die Ausnehmung nur an dem vorderen Ende des Rohres ausgebildet ist, so dass sich beim weiter nach vorne Treiben des gesamten Verlegerohres die noch immer leicht plastische Kunststoffmasse in die entsprechende Ausnehmung einlegt, wenn das Verlegerohr in ein bereits vorhandenes Rohr eingeschoben oder im Erdreich vorangetrieben wird.

Das Metallelement ist vorteilhafterweise als Metallgewebe, insbesondere Stahlgewebe ausgebildet, um einerseits eine optimale Erwärmung aufgrund einer Induktion zu ermöglichen und andererseits einer formschlüssigen Verbindung der Rohrenden nicht entgegenzustehen.

Nachfolgend wird anhand der beigefügten Figuren ein Ausführungsbeispiel der Erfindung näher beschrieben werden. Gleiche Bezugszeichen in verschiedenen Figuren bezeichnen gleiche Elemente. Es zeigen:
- Figur 1 -: eine Querschnittsansicht einer Fügestelle zweier Rohre vor Erreichen einer Endposition;
- Figur 2 -: eine Querschnittsansicht gemäß Figur 1 nach dem Fügen in Endposition;
- Figur 3 -: zwei Rohre im Querschnitt vor dem Fügen;
- Figur 4 -: zwei ineinander gefügte Rohre mit einem Heizelement; sowie
- Figur 5 -: eine Rohrverbindung gemäß Figur 4 mit entferntem Heizelement.

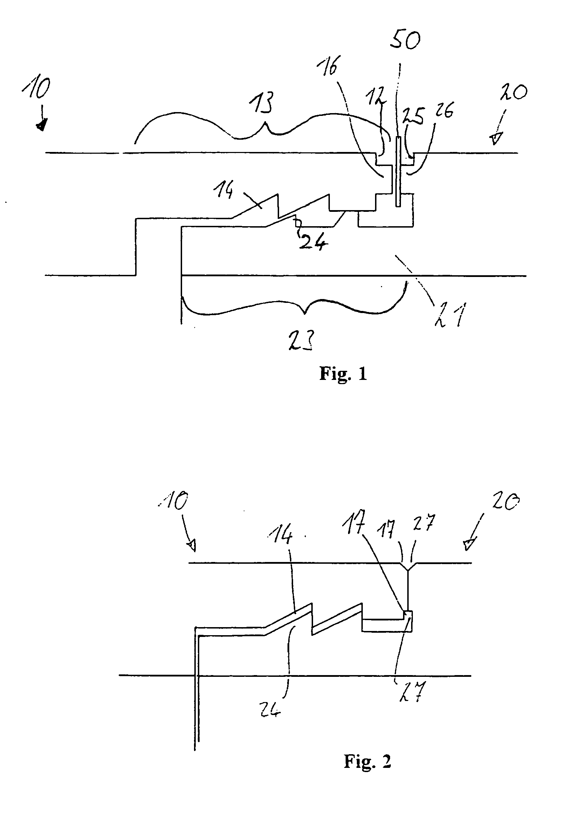

Figur 1 zeigt in einem Querschnitt ein erstes Rohr 10 mit einem hinteren Ende 12 und einem hinteren Kopplungsbereich 13, wobei innerhalb des Kopplungsbereiches 13 Verrastungsmittel 14 in Gestalt sägezahnförmiger, umlaufender Ausnehmungen gebildet sind. An der rückwärtigen Stirnseite des hinteren Endes 12 des ersten Rohres 10 ist eine Materialzugabe 16 in Gestalt einer Rippe ausgebildet, wobei sich Ausnehmungen umlaufend radial außen und radial innen von der Rippe 16 erstrecken.

In den hinteren Kopplungsbereich 13 ist ein vorderer Kopplungsbereich 23 eines zweiten Rohres 20 eingeführt, wobei sich der vordere Kopplungsbereich 23 an dem vorderen Ende 21 des zweiten Rohres 20 befindet. Der vordere Kopplungsbereich 23 weist einen zum Rohraußendurchmesser verringerten Außendurchmesser auf und ist mit erhöht ausgebildeten Verrastungsmitteln 24 in Gestalt umlaufender, sägezahnförmiger Vorsprünge ausgebildet. An dem rohrseitigen Ende des vorderen Kopplungsbereiches 23 ist ein Absatz 25 ausgebildet, der als stirnseitiger Anschlag beim Fügen der beiden Rohre 10, 20 fungiert. An dem Absatz 25 ist ebenfalls eine Materialzugabe 26 in Rippenform angeordnet. In der Figur 1 sind die beiden Rohre 10, 20 schon über einen gewissen Bereich ineinandergeschoben, so dass eine mechanische Vorverriegelung stattgefunden hat, da die Verrastungsmittel 24 des vorderen Endes 21 des zweiten Rohres 20 bereits in Anlage zu dem Innendurchmesser des ersten Rohres 10 gekommen sind.

Zwischen den Materialzugaben 16, 26 der beiden Rohre 10, 20 ist ein Heizelement 50 angeordnet, das in dem vorliegenden Ausführungsbeispiel die Materialzugaben 16, 26 erwärmt, wenn diese in Kontakt mit dem Heizelement 50 treten. Um bei einem Fließen aufgrund der Erwärmung des Kunststoffmateriales aufgrund der zugeführten Wärmeenergie durch das Heizelement 50 weiterhin Wärme in die Kunststofffrohre 10, 20 einbringen zu können, werden die beiden Kunststoffrohre 10, 20 kontinuierlich in Axialrichtung aufeinander zu bewegt, so dass ein steter Kontakt der Materialzugaben 16, 26 mit dem Heizelement 50 gewährleistet ist.

Nach einer ausreichenden Aufwärmung der entsprechenden Bereiche der Rohre 10, 20, hier die Materialzugaben 16, 26, wird das Heizelement 50 entfernt und die beiden Rohre 10, 20 werden in ihre Endposition verschoben, in der die Verrastmittel 14, 24 ineinander schnappen und eine sichere mechanische Verriegelung bewirken. Eine solche Endposition ist in der Figur 2 dargestellt. Durch die sägezahnförmigen Verrastmittel 14, 24 wird ein Auseinanderziehen der Rohre 10, 20 verhindert, und gleichzeitig wird aufgrund der stoffschlüssigen Verbindung in dem Bereich des Absatzes 25 und dem hinteren Ende 12 der Rohre 20, 10 eine dichte, stabile Verbindung erzeugt. Eine solche kombinierte Verbindung aus Formschluß und Stoffschluß vereint einerseits eine hohe mechanische Belastbarkeit unmittelbar nach dem Fügen mit einer Erhöhung der Festigkeit der Verbindung und einer zusätzlichen Absicherung gegenüber einer eventuellen Leckage. Zusätzlich können in den Kopplungsbereichen 13, 23 nicht dargestellte Dichtringe und Ausnehmungen für diese Dichtringe vorgesehen sein, um eine zusätzliche Abdichtung zu gewährleisten.

Aufgrund der Tatsache, dass eine stoffschlüssige Verbindung in den Aufschmelzbereichen stattfindet, können auch aggressive Medien transportiert werden, ohne dass die Gefahr eines Austretens dieser Medien aufgrund eventueller Undichtigkeiten beim Verkanten des verlegten Rohres auftritt.

Die Verlegegeschwindigkeit solcher gefügten Rohre kann wesentlich erhöht werden, da im Gegensatz zum herkömmlichen Stumpfverschweißen die Abkühlzeit entfällt, die normalerweise benötigt wird, um verschweißte Kunststoffrohre mechanisch belasten zu können. Weiterhin entfällt der Arbeitsschritt des Entfernens sogenannter Innenwülste, die beim Aufschmelzen und Aufeinanderzubewegen der Rohre zwangsläufig entstehen. Weiterhin ist eine größere Genauigkeit bei der Rohrverbindung erzielbar, da die Verbindungsstellen nicht durch aufwendige, mechanische Halteeinrichtungen in der entsprechenden Position fixiert werden müssen. Das Ausrichten der Rohre 10, 20 wird durch das Ineinanderstecken der Rohrenden bereits bewirkt, wobei die Verrastungsmittel 14, 24 ein unbeabsichtigtes Auseinandergleiten bereits verhindern können.

In der Figur 2 sind noch Ausnehmungen 17, 27 radial beiderseits der Schweißstelle zu sehen, die nicht vollständig mit dem aufgeschmolzenen und beim Fügen nach außen und innen dringendem Rohrmaterial ausgefüllt sind. Bei einem weitergehenden Ineinanderschieben würde eine entsprechende Materialmenge nach außen und innen dringen, so dass zumindest ein glattwandiger Außenabschluß erreichbar wäre. Die Ausnehmungen 17, 27 radial innen sind notwendig, um bei einem Fügen mittels entsprechender Aktuatoren, beispielsweise pneumatische, hydraulische oder hebel- oder getriebebetätigte Vorrichtungen, ein Blockieren bzw. ein Aufweiten des hinteren Endes des entsprechenden Rohres zu verhindern.

Alternativ zu dem beschriebenen Heizelement ist es möglich und vorgesehen, dass in dem Rohrende 12 bzw. Absatz 25 der Rohre 10, 20 Metalleinlagen, vorzugsweise ein Metallgewebe, integriert sind, die über Induktionsspulen mit Energie beaufschlagt werden, so dass eine lokale Erhitzung der jeweiligen Bereiche schnell und unkompliziert erfolgt.

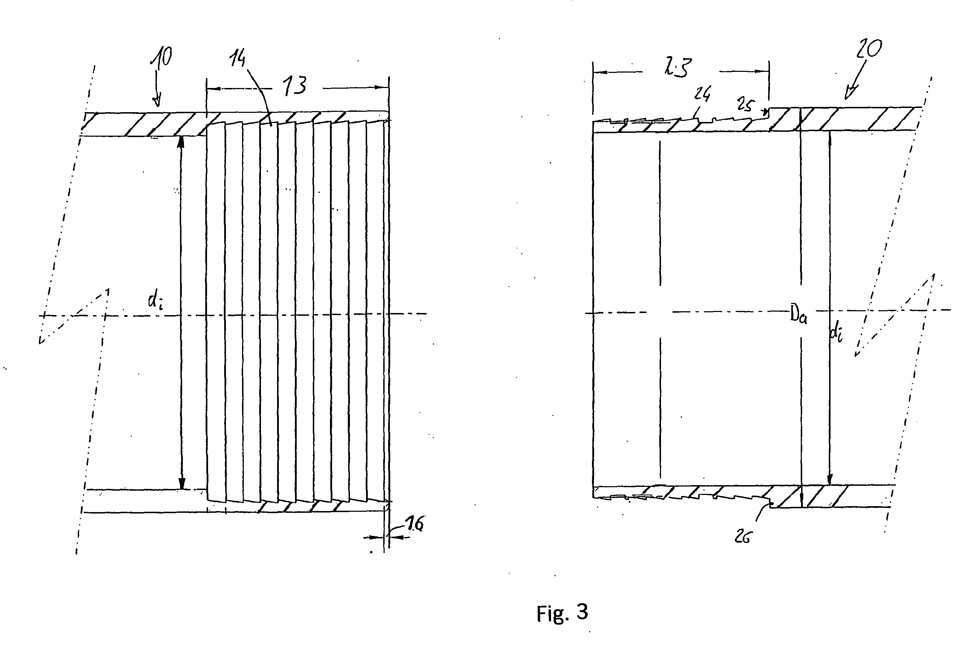

In der Figur 3 ist eine Variante der Erfindung dargestellt, bei der die beiden Rohre 10, 20 vor dem mechanischen Fügen dargestellt sind. Deutlich sind die Vielzahl an Verrastungsmitteln 14, 24 an den Kopplungsbereichen 13, 23 zu erkennen, wobei der hin tere Kopplungsbereich 13 des ersten Rohres 10 einen gegenüber dem Rohrinnendurchmesser dᵢ vergrößerten Innendurchmesser aufweist und der vordere Kopplungsbereich 23 des zweiten Rohres ein gegenüber dem Rohraußendurchmesser Dₐ verringerten Außendurchmesser aufweist. Die Aufschmelzbereiche 16, 26 der Rohre 10, 20 sind vorliegend nicht als Rippe ausgebildet, sondern sind glattflächig ausgebildet, so dass beim Fügen der Rohre 10, 20 das hintere Ende 12 des ersten Rohres 10 und der Absatz 25 des Rohres 20 vollflächig aneinander anliegen würden.

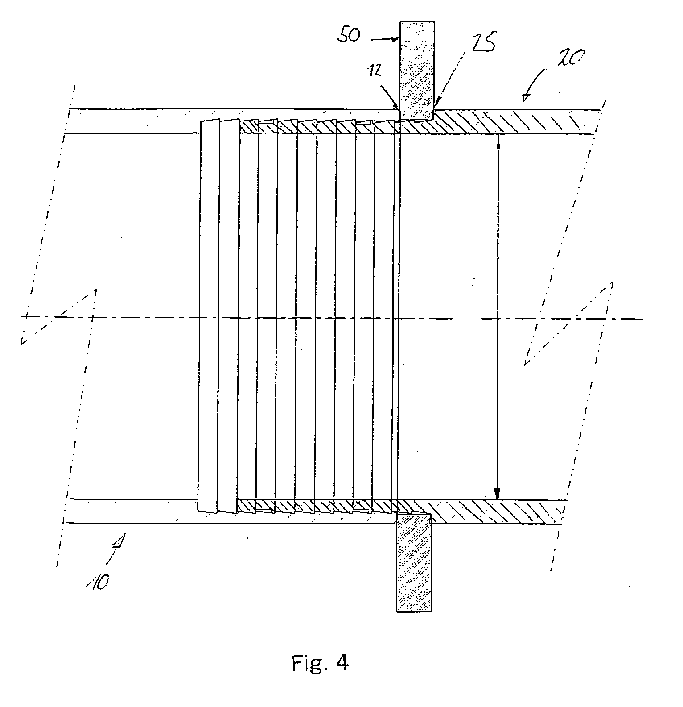

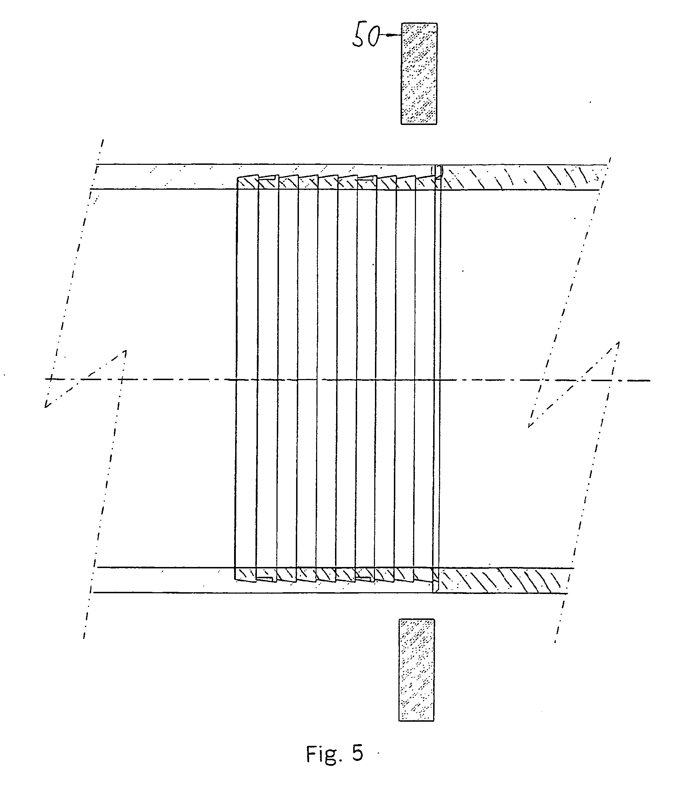

Figur 4 zeigt eine Stellung der Rohre 10, 20 der Figur 3, die bis zur vorletzten Verrastung der Verrastungsmittel 14, 24 ineinander geschoben sind, wobei zwischen dem hinteren Ende 12 des Rohres 10 und dem Absatz 25 umlaufend das Heizelement 50 angeordnet ist. Das Heizelement 50 erwärmt das hintere Ende 12 des Rohres 10 und den Absatz 25 des Rohres 20 und nach Entfernen des Heizelementes 50, wie in der Figur 5 dargestellt, werden die beiden Rohre 10, 20 ineinander geschoben, so dass sämtliche Verrastungsmittel 14, 24 ineinandergreifen. Die Rohre 10, 20 befinden sich in ihrer Endposition.

Während der vordere Kopplungsbereich 23 als Stützkörper für den hinteren Kopplungsbereich 13 dient und die mechanische Stabilität für das Rohrgefüge darstellt, wird die formschlüssige Verbindung in dem aufgeschmolzenen Bereich realisiert. Unmittelbar nach dem Entfernen des Heizelementes 50 kann das miteinander verbundene Rohrgefüge vorangeschoben werden, ohne ein Abkühlen abwarten zu müssen. Ein Innenwulst entsteht nicht, da aufgrund des vorderen Kopplungsbereiches 23 ein Eindringen nach innen des aufgeschmolzenen Kunststoffs nicht möglich ist.

## Patentansprüche

1. Verfahren zum Fügen eines ersten Kunststoffrohres (10) mit einem zweiten Kunststoffrohr (20) mit je einem vorderen Ende (11, 21) und einem hinteren Ende (12, 22), bei dem das vordere Ende (21) des zweiten Rohres (20) in das hintere Ende (12) des ersten Rohres (10) eingeführt wird, wobei an den Enden (11, 12, 21, 22) der Rohre (10, 20) je ein Kopplungsbereich (13, 23) mit korrespondierend ausgebildeten Verrastungsmitteln (14, 24) vorgesehen sind, über die die Rohre (10, 20) formschlüssig miteinander verbindbar sind, **dadurch gekennzeichnet, dass** das hintere Ende (12) des ersten Rohres (10) und ein Absatz (25) am rohrseitigen Ende des Kopplungsbereiches (23) des zweiten Rohres (20) bis zur Schmelze erwärmt und die Rohre (10, 20) nach dem Aufschmelzen in eine Endposition geschoben werden, wobei die Verrastungsmittel (14, 24) die Rohre (10, 20) formschlüssig verbinden und in dem aufgeschmolzenen Bereich eine stoffschlüssige Verbindung hergestellt wird.

2. Verfahren nach Anspruch 1, **dadurch gekennzeichnet, dass** die Rohre (10, 20) während des Aufschmelzens axial zueinander belastet werden.

3. Verfahren nach Anspruch 1 oder 2, **dadurch gekennzeichnet, dass** das Schmelzen durch ein Heizelement (50) erfolgt, das zwischen dem Absatz (25) des zweiten Rohres (20) und dem hinteren Ende (12) des ersten Rohres (10) angeordnet ist und nach dem Aufschmelzen entfernt wird.

4. Verfahren nach Anspruch 1 oder 2, **dadurch gekennzeichnet, dass** in dem Absatz (25) des zweiten Rohres (20) oder dem hinteren Ende (12) des ersten Rohres (10) ein Metallelement angeordnet ist und dass das Erwärmen mittels Induktionserwärmung erfolgt.

5. Verfahren nach einem der voranstehenden Ansprüche, **dadurch gekennzeichnet, dass** an dem Absatz (25) des zweiten Rohres (20) und/oder dem hinteren Ende (12) des ersten Rohres (10) eine Materialzugabe (16, 26) angeordnet ist, die dergestalt aufgeschmolzen wird, dass nach dem Aufschmelzen der Materialzugabe (16, 26) und Ineinanderschieben der Rohre (10, 20) die Endposition eingenommen wird.

6. Verfahren nach einem der voranstehenden Ansprüche, **dadurch gekennzeichnet, dass** die Rohre (10, 20) pneumatisch, hydraulisch oder über hebel- oder getriebebetätigte Aktuatoren ineinander geschoben werden.

7. Kunststoffrohr (10) mit einem vorderen Ende (11) und einem hinteren Ende (12), wobei an dem vorderen Ende (11) ein vorderer Kopplungsbereich (13) mit einem zum Rohraußendurchmesser (Dₐ) verringerten Außendurchmesser mit zumindest einem erhöht ausgebildeten Verrastungsmittel (24) ausgebildet ist und an dem hinteren Ende (12) ein hinterer Kopplungsbereich (23) mit einem zum Rohrinnendurchmesser (dᵢ) vergrößerten Innendurchmesser mit zumindest einem vertieft ausgebildeten Verrastungsmittel (14) ausgebildet ist, wobei der Außendurchmesser größer als der Innendurchmesser ist und die Verrastungsmittel (14, 24) der Kopplungsbereiche (13, 23) miteinander korrespondieren, so dass mehrere Rohre (10, 20) miteinander mechanisch verbunden werden können, **dadurch gekennzeichnet, dass** an dem hinteren Ende (12) des Rohres (10) und/oder an einem Absatz (25) an dem rohrseitigen Ende des vorderen Kopplungsbereiches (13) ein sich axial erstreckender Aufschmelzbereich (16, 26) ausgebildet ist.

8. Kunststoffrohr nach Anspruch 7, **dadurch gekennzeichnet, dass** der Aufschmelzbereich (16, 26) dergestalt ausgebildet ist, dass er eine Verriegelung über die gesamte Länge der Kopplungsbereiche (13, 23) verhindert.

9. Kunststoffrohr nach Anspruch 7 oder 8, **dadurch gekennzeichnet, dass** der Aufschmelzbereich als eine Rippe (16, 26) ausgebildet ist.

10. Kunststoffrohr nach Anspruch 7 oder 8, **dadurch gekennzeichnet, dass** radial innen und/oder radial außen des Auf schmelzbereiches (16, 26) eine Ausnehmung (17, 27) zur Aufnahme aufgeschmolzenen, verdrängten Materials ausgebildet ist.

11. Kunststoffrohr nach einem der Ansprüche 7 bis 10, **dadurch gekennzeichnet, dass** innerhalb des Auf schmelzbereiches (16, 26), an dem Absatz (25) und/oder dem hinteren Ende (12) des Kunststoffrohres (10) ein Metallelement eingelegt ist.

12. Kunststoffrohr nach Anspruch 11, **dadurch gekennzeichnet, dass** das Metallelement als Metallgewebe, insbesondere Stahlgewebe ausgebildet ist.

## Claims

1. Method of joining a first plastic pipe (10) to a second plastic pipe (20), each having a front end (11, 21) and a rear end (12, 22), in which the front end (21) of the second pipe (20) is inserted into the rear end (12) of the first pipe (10), in each case a coupling region (13, 23) with correspondingly designed latching means (14, 24) being provided at the ends (11, 12, 21, 22) of the pipes (10, 20), via which the pipes (10, 20) can be connected to each other with a form fit, **characterized in that** the rear end (12) of the first pipe (10) and a shoulder (25) at the pipe-side end of the coupling region (23) of the second pipe (20) are heated to melting and, after being melted, the pipes (10, 20) are pushed into an end position, the latching means (14, 24) connecting the pipes (10, 20) with a form fit and a cohesive connection being produced in the molten region.

2. Method according to Claim 1, **characterized in that** the pipes (10, 20) are loaded axially in relation to each other during the melting.

3. Method according to Claim 1 or 2, **characterized in that** the melting is carried out by means of a heating element (50) which is arranged between the shoulder (25) of the second pipe (20) and the rear end (12) of the first pipe (10) and is removed after the melting.

4. Method according to Claim 1 or 2, **characterized in that** a metal element is arranged in the shoulder (25) of the second pipe (20) or the rear end (12) of the first pipe (10), and **in that** the heating is carried out by means of induction heating.

5. Method according to one of the preceding claims, **characterized in that** an addition of material (16, 26) is arranged on the shoulder (25) of the second pipe (20) and/or the rear end (12) of the first pipe (10) and is melted in such a way that, after the addition of material (16, 26) has been melted and the pipes (10, 20) have been pushed into each other, the end position is assumed.

6. Method according to one of the preceding claims, **characterized in that** the pipes (10, 20) are pushed into each other pneumatically, hydraulically or by lever-operated or gear-operated actuators.

7. Plastic pipe (10) having a front end (11) and a rear end (12), a front coupling region (13) with an external diameter reduced in relation to the pipe external diameter (Dₐ) and with at least one elevated latching means (24) being formed at the front end (11), and a rear coupling region (23) with an internal diameter enlarged in relation to the pipe internal diameter (dᵢ) and with at least one depressed latching means (14) being formed at the rear end (12), the external diameter being greater than the internal diameter and the latching means (14, 24) of the coupling regions (13, 23) corresponding to one another, so that a plurality of pipes (10, 20) can be connected mechanically to one another, **characterized in that** a melting region (16, 26) extending axially is formed at the rear end (12) of the pipe (10) and/or on a shoulder (25) on the pipe-side end of the front coupling region (13).

8. Plastic pipe according to Claim 7, **characterized in that** the melting region (16, 26) is formed in such a way that it prevents locking over the entire length of the coupling regions (13, 23).

9. Plastic pipe according to Claim 7 or 8, **characterized in that** the melting region is formed as a rib (16, 26).

10. Plastic pipe according to Claim 7 or 8, **characterized in that** a recess (17, 27) to accommodate molten, displaced material is formed radially inside and/or radially outside the melting region (16, 26).

11. Plastic pipe according to one of Claims 7 to 10, **characterized in that** a metal element is inlaid within the melting region (16, 26), on the shoulder (2) and/or the rear end (12) of the plastic pipe (10).

12. Plastic pipe according to Claim 11, **characterized in that** the metal element is formed as a metal fabric, in particular a steel fabric.

## Revendications

1. - Procédé de jonction d'un premier tube en matière synthétique (10) avec un second tube en matière synthétique (20) ayant chacun une extrémité avant (11, 21) et une extrémité arrière (12, 22) dans lequel l'extrémité avant (21) du second tube (20) est introduite dans l'extrémité arrière (12) du premier tube (10), les extrémités (11, 12, 21, 22) des tubes (10, 20) étant pourvues chacune d'une zone d'accouplement (13, 23) comportant des moyens d'encliquetage (14, 24) conçus de façon à correspondre au moyen desquels les tubes (10, 20) peuvent être liés ensemble par coopération de formes, **caractérisé en ce que** l'extrémité arrière (12) du premier tube (10) et un décrochement (25) à l'extrémité adjacente au tube de la zone d'accouplement (23) du second tube (20) sont chauffés jusqu'à fusion et les tubes (10, 20) après fusion, sont déplacés vers une position finale dans laquelle les moyens d'encliquetage (14, 24) lient les tubes (10, 20) par coopération de formes et une liaison par coopération de matière est établie dans la zone fondue.

2. - Procédé selon la revendication 1, **caractérisé en ce que** les tubes (10, 20) sont durant la fusion sollicités axialement l'un vers l'autre par une force.

3. - Procédé selon la revendication 1 ou 2, **caractérisé en ce que** la fusion est réalisée au moyen d'un élément chauffant (50) disposé entre le décrochement (25) du second tube (20) et l'extrémité arrière (12) du premier tube (10) qui est enlevé après la fusion.

4. - Procédé selon la revendication 1 ou 2, **caractérisé en ce qu'**un élément métallique est disposé dans le décrochement (25) du second tube (20) ou dans l'extrémité arrière (12) du premier tube (10) et **en ce que** le chauffage est effectué par chauffage par induction.

5. - Procédé selon l'une des revendications précédentes, **caractérisé en ce qu'**un apport de matière (16, 26) est disposé contre le décrochement (25) du second tube (20) et/ou contre l'extrémité arrière (12) du premier tube (10), cet apport étant fondu de telle sorte, qu'après la fusion de l'apport de matière (16, 26) et déplacement des tubes (10, 20) l'un dans l'autre la position finale est obtenue.

6. - Procédé selon l'une des revendications précédentes, **caractérisé en ce que** les tubes (10, 20) sont déplacés l'un dans l'autre, pneumatiquement, hydrauliquement ou au moyen d'actionneurs entraînés par levier ou engrenages.

7. - Tube en matière synthétique (10) ayant une extrémité avant (11) et une extrémité arrière (12) dans lequel à l'extrémité avant (11) est réalisée une zone d'accouplement (13) ayant un diamètre extérieur réduit par rapport au diamètre extérieur (Da) du tube et comportant au moins un moyen d'encliquetage (24) en saillie et à l'extrémité arrière (12) est réalisée une zone d'accouplement arrière (23) ayant un diamètre intérieur augmenté par rapport au diamètre intérieur (di) du tube avec au moins un moyen d'encliquetage (14) réalisé en creux de sorte que le diamètre extérieur est supérieur au diamètre intérieur et les moyens d'encliquetage (14, 24) des zones d'accouplement (13, 23) correspondent l'un avec l'autre, de sorte que plusieurs tubes (10, 20) peuvent être liés mécaniquement, **caractérisé en ce qu'**à l'extrémité arrière (12) du tube (10) et/ou à un décrochement (25) à l'extrémité adjacente au tube de la zone d'accouplement avant (13) est réalisée une zone de fusion (16, 26) s'étendant axialement.

8. - Tube en matière synthétique selon la revendication 7, **caractérisé en ce que** la zone de fusion (16, 26) est réalisée de telle sorte qu'elle empêche un verrouillage suivant la totalité de la longueur des zones d'accouplement (13, 23).

9. - Tube en matière synthétique selon la revendication 7 ou 8, **caractérisé en ce que** la zone de fusion est réalisée sous forme de nervure (16, 26).

10. - Tube en matière synthétique selon la revendication 7 ou 8, **caractérisé en ce qu'**un évidemment (17, 27) est réalisé radialement vers l'intérieur ou radialement vers l'extérieur de la zone de fusion (16, 26) pour recevoir la matière fondue déplacée.

11. - Tube en matière synthétique selon l'une des revendications 7 à 10, **caractérisé en ce qu'**un élément métallique est posé à l'intérieur de la zone de fusion (16, 26) contre le décrochement (25) et/ou à l'extrémité arrière (12) du tube en matière synthétique (10).

12. - Tube en matière synthétique selon la revendication 11, **caractérisé en ce que** l'élément métallique est réalisé sous forme de tissu métallique, en particulier en tissu d'acier.
